# EUROPEAN PATENT APPLICATION

(11) **EP 2 244 423 A1**
(43) Date of publication of application: **27.10.2010**
(21) Application number: 10160922.0
(22) Date of filing: 23.04.2010
(51) Int. Cl.: H04L 12/56

(54) **Routing traffic in a cellular communication network**

(30) Priority: 23.04.2009 ES 200930088
(71) Applicant: Vodafone Group PLC, Newbury Berkshire RG14 2FN (GB); Vodafone España, S.A.U., 28108 Alcobendas (ES)
(72) Inventor: Garriga Muñiz, Beatriz, E-28050, Madrid (ES); Exadaktylos, Kyriakos, E-28050, Madrid (ES); Dominguez Romero, Francisco, E-28050, Madrid (ES)
(74) Representative: Keston, David Arthur

(57) **Abstract**

A method is described for routing traffic between a base station (40) and a next network node (30) in a cellular communication network (10) over one of a plurality of paths (32,34) between them having mutually different latency levels. The path over which the traffic is routed is selected based on latency requirements of the traffic and the latency level of the paths. The latency requirements of the traffic are dependent on the service and/or user of the traffic.

## Description

### Technical field

The present invention relates to a method for routing traffic in a cellular communication network as well as to a corresponding cellular communication network.

### Description of related art

In current cellular communication networks, many services and applications are used. These services and applications have different requirements with respect to their latency. Some of them are very sensitive to the latency (either one-way delay or round trip time (RTT) delay) of the network, and some of them are not so sensitive.

For example, voice has a maximum delay acceptance in one way and is therefore quite sensitive to the latency in one way. However, it is not so delay sensitive to the RTT delay, because no acknowledge is sent for every packet. Interactive web browsing services are, on the contrary, quite sensitive to the RTT delay. The sooner the acknowledge message of the terminal is received, the faster the web page will be downloaded , independently of the peak rates of the download, which in High Speed Packet Access (HSPA) networks may be very high. For File Transfer Protocol (FTP) service types, it is not so important to maintain a low RTT delay, but it is more important to provide a high peak rate and a high bandwidth.

In cellular communication networks, one of the main bottlenecks in terms of bandwidth and delay is the connection between the base station and the next hierarchically higher network node. In case of Second Generation (2G) networks, this connection corresponds to the Abis interface and the next network node is the Base Station Controller (BSC), in case of Third Generation (3G) networks this connection corresponds to the lub interface and the next network node is the Radio Network Controller (RNC), and in case of Long Term Evolution (LTE) networks, this connection corresponds to the S1 interface and the next network node is a node in the Core Network.

In view of the increase in bandwidth demand and cost reduction, it is nowadays common that several paths are available on these connections to maximise the efficiency of the transmission. Typically two paths are present, wherein one path uses a traditional Asynchronous Transfer Mode (ATM)/Time Division Multiplex (TDM) network and the other path uses an Internet Protocol (IP)/Ethernet network. A part of the traffic belonging to a certain service may be routed over one of the paths and another part of the traffic may be simultaneously routed over the other path to improve throughput. Alternatively, is possible that all traffic belonging to a certain service is routed over both paths for redundancy reasons. Furthermore, the traffic of a connection may be routed over a single one of the two available paths at a time, which path is randomly selected. As a result, the latency of the traffic varies over time and the packets may arrive at their destination out of their logical order.

The patent application EP 2 001 174 A1 discloses that a scheduled transmission path of each packet to be transmitted is so determined that the order of predicted arrival time at a reception node is equal to the order of arrival time at a transmission node from estimate values of delay and velocity of each path. Only a packet predicted to arrive within the maximum permissible delay of each path is transmitted among the packets. This enables both of optimum allocation of the load between the paths and the prevention of a delay increase due to multiplexing.

However, the method disclosed in this document still suffers from the problem that delay-sensitive services may be transmitted on the high delay path and services, which are not delay sensitive, may be transmitted on the low delay path.

### SUMMARY OF THE INVENTION

It is an object of the invention to provide a method and a corresponding cellular communication network by which the above mentioned problem is at least partially solved.

Thereto, according to the invention a method and a cellular communication network according to the independent claims are provided. Favourable embodiments are defined in the dependent claims.

According to an aspect of the invention, a method is provided for routing traffic between a base station and a next network node in a cellular communication network over one of a plurality of paths between them, wherein at least some of the plurality of paths have mutually different latency levels. The path over which the traffic is routed is selected based on latency requirements of the traffic and the latency level of the path. The latency requirements are dependent on the service and/or user of the traffic. The latency requirements, which are taken into account, may relate to the one-way delay of the traffic or the round trip time (RTT) delay thereof.

As a result, the transmission resources, which are used for the traffic between a base station and a hierarchically next higher network node, are better adapted to the service and/or user requirements of the traffic.

The path for routing the traffic may be selected based on pre-existing knowledge regarding the latency levels of the paths. However, according to a preferred embodiment latency level measurements are performed on the paths between the base station and the next network node to determine the latency level thereof. The latency level measurements may be performed by transmitting dummy packets between the base station and the next network node or by monitoring predefined packets.

A plurality of measurements may be performed on each of the paths and the variation of the latency level thereon may be determined. It may be useful to take the variation of the latency level into account for routing traffic, which is sensitive to jitter.

According to an embodiment of the present invention, based on the measurements each of the paths is classified in a latency category. Every service and/or user of traffic that may be routed between the base station and the next network node is allocated to a latency sensitivity category. A path for routing traffic can then be selected based on the latency sensitivity category of the service/user thereof and the latency category of the path.

According to a further embodiment of the present invention, Quality of Service (QoS) parameters are used to classify the services/users into latency sensitivity categories. In case that the cellular communication network works according to the 3GPP-standard, an Allocation Retention Priority (ARP) parameter and a Traffic Handling Priority (THP) parameter may be used. Thereby major modifications of the standard are avoided.

According to a still further embodiment of the present invention, in case that the selected path is congested a further path is selected for routing the traffic having a different latency level than the selected path. Each latency sensitivity category may be mapped to a path that is selected first for routing the traffic and a further path that is selected for routing in case of congestion on the first selected path.

Preferably, the method according to the invention is implemented by means of a computer program loaded to one or more of the network nodes of the cellular communication network.

According to a further aspect of the invention, a cellular communication network is provided comprising at least a base station, which is connected to a next network node in the cellular communication network over a plurality of paths, wherein at least some of the plurality of paths have mutually different latency levels, characterised in that it comprises means for selecting the path over which the traffic is routed based on latency requirements of the traffic and the latency level of the paths, wherein the latency requirements are dependent on the service and/or user of the traffic.

These and other aspects of the invention will be apparent from and elucidated with reference to the embodiments described hereinafter.

### BRIEF DESCRIPTION OF THE DRAWINGS

The invention will be better understood and its numerous objects and advantages will become more apparent to those skilled in the art by reference to the following drawing, in conjunction with the accompanying specification, in which:

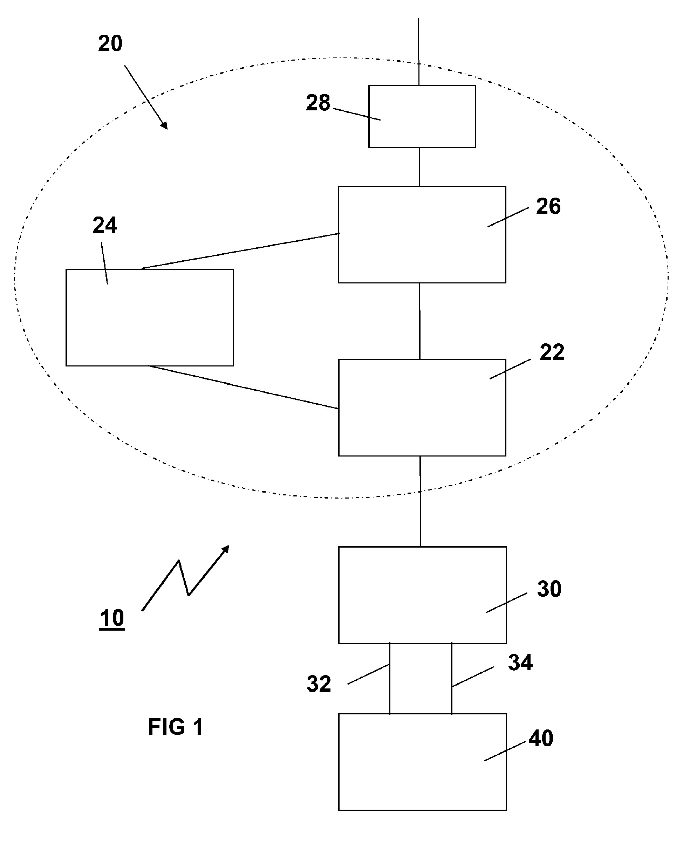

Figure 1 shows the architecture of a third generation cellular communication network wherein the present invention may be implemented.

Throughout the figures like reference numerals refer to like elements.

### DETAILED DESCRIPTION OF THE PRESENT INVENTION

Figure 1 shows the architecture of a third generation cellular communication network 10 wherein the present invention may be implemented. Only the elements necessary for understanding the present invention are shown. The network comprises a radio access network and a core network 20. The core network 20 comprises, amongst others, a Serving GPRS Support Node (SGSN) 22, a Home Location Register (HLR) 24, a Gateway GPRS Support Node (GGSN) 26 and a node 28 responsible for traffic inspection. The radio access network comprises control nodes 30, of which only one is shown and base stations 40 (again only one of them is shown), providing radio coverage to respective cells. According to the 3GPP standard, the control nodes for a UMTS (3G) network are denominated Radio Network Controller (RNC) and the base stations are denominated Node-B. The interface between the RNC and node B is denominated lub. The Node-B 40 is the lowest network node in the network hierarchy. The RNC 30 is the next network node in the network hierarchy.

The RNC 30 and Node-B 40 are connected to each other by means of a first path 32 over a traditional Asynchronous Transfer Mode (ATM)/Time Division Multiplex (TDM) network and a second path 34 over an Internet Protocol (IP)/Ethernet network. The latency on the first path is lower and varies less than the latency on the second path. Of course, the number of paths between the RNC 30 and Node-B 40 shown in figure 1 is only exemplary. There may be more than two paths with mutually different latency levels between them.

According to an exemplary implementation, latency level measurements are performed on every path between the node-B and the RNC in order to determine on which of the paths each type of traffic should be routed. The latency, which is measured, may be the Round Trip Time (RTT) or the one-way delay.

There are several ways to perform the latency level measurements. For example, dummy packets may be transmitted from the node-B to the RNC and/or vice versa. Alternatively, it may be monitored how long certain predefined packets need to go from the node-B to the RNC (or vice versa). This could be determined by measuring the arrival time at NBAP (Node-B Application Protocol) level. Furthermore, in order to determine the RTT of an IP-path, pings may be used. Various latency measurements are needed in order to build a pattern of the latency. Based on the pattern, values such as the minimum, medium, maximum and standard deviation/variation ("jitter") of the latency may be determined. Some applications are more sensitive to fluctuations of the latency ("jitter") than to high latency values as such. For such applications, the variation of the latency is a relevant parameter for selecting the path over which its traffic is to be routed.

Based on the latency measurements, every path is classified into a latency category. It is possible to define categories based on the range of the latency.

The following table shows an example of such a classification in case that the latency parameter is the RTT.

| Type of path | Range |
|---|---|
| Low latency | 0 ms < RTT < 10 ms |
| Medium latency | 10 ms < RTT < 50 ms |
| High latency | 50 ms < RTT |

Of course it is possible to define more than three latency categories.

According to an alternative example, the classification is not based on measurements but on pre-existing knowledge of the latency level of certain type of paths. For example, an IP path over an ADSL connection may always be classified as a high latency path.

Every service and/or user of traffic routed from or to the node-B is classified in a latency sensitivity category. This classification can be a static one or a dynamic one. In case that the classification is a static one, the services and/or users are always in the same latency sensitivity category. In case of a dynamic classification, the classification changes over time. For example, at times that the load of the network is low, for example a night, certain services or users may be classified in a higher latency sensitivity category than at times that there is a high load on the network. Preferably, the classification is stored in the HLR 24.

The following table shows an exemplary classification of services/users:

| Service | Latency sensitivity | Value |
|---|---|---|
| Service/User A | RTT must be less than | 50 ms |
| Service/User B | RTT is preferably less than RTT must be less than | 20 ms 100 ms |
| ... | ... | ... |
| Service/User C | RTT is preferably less than | 100 ms |

To perform this classification one of the QoS parameters defined in the 3GPP standard may be used. A first possibility is to use the parameter "Transfer Delay", which according to the current version of the standard is only used for the Traffic Classes (TC) "Conversational" and "Streaming", but not in case of the Traffic Classes "Interactive" and "Background". So, in order to use this parameter also for the Traffic Classes "Interactive" and "Background" a modification in the standard would be needed. Alternatively or additionally, the parameter "Allocation Retention Priority" (ARP) is used. If only the ARP is used for the classification, there is no need to modify the standard because according to the standard it is used for all Traffic Classes. However, it only has three possible values, so the number of latency sensitivity categories that may be defined in this way is rather limited. In case that there is a need to have a finer classification, the "Traffic Handling Priority" (THP) may be used, additionally. However, according to the current version of the standard, this QoS parameter is only used for the Traffic Class "Interactive". This limits the number of categories but it can be used for the best effort Packet Services which can be mapped to TC Interactive.

An example of classification of the latency sensitivity categories using ARP and THP is shown in the following table.

| Type of f service | ARP | THP | Latency Sensitivity | Value |
|---|---|---|---|---|
| Service/User A | 1 | 1 | RTT must be less than | 10 ms |
| Service/User B | 1 | 2 | RTT is preferably less than | 20 ms |
| | | | RTT must be less than | 50 ms |
| ... | ... | ... | ... | .... |
| Service/User C | 3 | 3 | RTT is preferably less than | 100 ms |

Node 28 may be used to detect the type of service/user of the traffic to and from node-B 40. It sends a signalling message to the HLR 24 in order to modify the service/user profile, changing the combination of THP/ARP. The HLR 24 sends a signalling message with the THP/ARP combination to the SGSN 22 and then the information arrives to the node-B 40 (in case of uplink traffic) or the RNC 30 in case of downlink traffic, as is known *per se.* The packet scheduler of the node-B/RNC maps the THP/ARP combination to a path and routes the corresponding traffic over this selected path.

The following table is an example of this mapping for the two-path configuration shown in figures 1 and 2.

| Type of service | Primary Path | Secondary path |
|---|---|---|
| ARP/THP (1/1) | Path 32 | NA |
| ARP/THP (1/2) | Path 32 | Path 34 |
| ... | ... | ... |
| ARP/THP (3/3) | Path 34 | Path 32 |

In this table the primary path is the path in which the call corresponding to the type of service of the traffic in question will be setup. The secondary path is used only in case that the primary path is congested.

The present invention, as described herein above, may implemented by means of computer programs loaded to the node-B 40, RNC 30, HLR 24 and the node 28 responsible for traffic inspection.

While the invention has been illustrated and described in detail in the drawings and foregoing description, such illustration and description are to be considered illustrative or exemplary and not restrictive; the invention is not limited to the disclosed embodiments.

For example, the present invention may be implemented in second generation cellular communication networks for routing traffic over the Abis interface between Base Transceiver Stations (BTSs) and Base Station Controllers (BSCs, the next hierarchically higher network nodes). Furthermore, the present invention may be implemented in a Long Term Evolution (LTE) cellular communication network, currently being standardised and also often referred to as the fourth generation (4G) cellular network. In this case, the invention is implemented for routing traffic between the Evolved Nodes-B (eNB) and the Mobility Management Entity (MME) and/or System Architectural Evolution (SAE) in the core network, which are the next hierarchically higher network nodes in the LTE network architecture.

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for routing traffic between a base station (40) and a next network node (30) in a cellular communication network (10) over one of a plurality of paths (32,34) between them, wherein at least some of the plurality of paths have mutually different latency levels, **characterised by** selecting the path over which the traffic is routed based on latency requirements of the traffic and the latency level of the paths, wherein the latency requirements of the traffic are dependent on the service and/or user of the traffic.

2. Method according to claim 1 wherein latency level measurements are performed on the paths between the base station and the next network node.

3. Method according to claim 2 wherein the latency level measurements are performed by transmitting dummy packets between the base station and the next network node or by monitoring predefined packets.

4. Method according to claim 2 or 3 wherein a plurality of measurements is performed on each of the paths and wherein the statistical variation of the latency level thereon is determined.

5. Method according to any one of claims 2-4 wherein based on the measurements each of the paths is classified in a latency category.

6. Method according to any of the preceding claims, wherein the path over which the traffic is routed is selected based on a latency sensitivity category of the service and/or user of the traffic.

7. Method according to claim 6, wherein QoS parameters are used to classify the latency sensitivity category of the service and/or user.

8. Method according to claim 7, wherein the QoS parameters comprise an Allocation Retention Priority parameter and a Traffic Handling Priority parameter.

9. Method according to any of the claims 6-8, wherein in case that the selected path is congested, a further path is selected for routing the traffic having a different latency level than the selected path.

10. Method according to claim 9, wherein the latency sensitivity categories are mapped to a path to be selected for routing the traffic and a further path having a different latency, which further path is selected for routing the traffic in case of congestion on the path.

11. A computer program comprising computer program code means adapted to perform the steps of any one of claims 1 to 10, when said program is run on a computer.

12. Cellular communication network (10) comprising at least a base station (40), which is connected to a next network node (30) in the cellular communication network over a plurality of paths (32,34), wherein at least some of the plurality of paths have mutually different latency levels, **characterised in that** it comprises means for selecting the path over which the traffic is routed based on latency requirements of the traffic and the latency level of the paths, wherein the latency requirements are dependent on the service and/or user of the traffic.
